Europäisches Patentamt

(19) European Patent Office

Office européen des brevets

(11) Publication number: **0 040 878**
**B1**

# (12) EUROPEAN PATENT SPECIFICATION

(45) Date of publication of patent specification: **22.10.86**

(21) Application number: **81200525.4**

(22) Date of filing: **15.05.81**

(51) Int. Cl.⁴: **G 02 B 7/18, G 02 B 5/08,
G 02 B 27/14, G 11 B 7/135**

(54) **Apparatus comprising an electrically controllable reflection device for deflecting a radiation beam.**

(30) Priority: **22.05.80 NL 8002958**

(43) Date of publication of application:
**02.12.81 Bulletin 81/48**

(45) Publication of the grant of the patent:
**22.10.86 Bulletin 86/43**

(84) Designated Contracting States:
**AT BE DE FR GB IT NL SE**

(56) References cited:
**DE-B-1 101 796**
**US-A-4 123 146**

(73) Proprietor: **N.V. Philips' Gloeilampenfabrieken
Groenewoudseweg 1
NL-5621 BA Eindhoven (NL)**

(72) Inventor: **Gijzen, Wilhelmus Adrianus Henricus
c/o INT. OCTROOIBUREAU B.V. Prof. Holstlaan 6
NL-5656 AA Eindhoven (NL)**
Inventor: **van Rosmalen, Gerard Eduard
c/o INT. OCTROOIBUREAU B.V. Prof. Holstlaan 6
NL-5656 AA Eindhoven (NL)**

(74) Representative: **Van Weele, Paul Johannes Frits
et al
INTERNATIONAAL OCTROOIBUREAU B.V. Prof.
Holstlaan 6
NL-5656 AA Eindhoven (NL)**

Courier Press, Leamington Spa, England.

## Description

The invention relates to an apparatus comprising an electrically controllable reflection device for deflecting a radiation beam in a direction which depends on an electric control signal, which device comprises a reflection element which is electrically pivotable about a pivoting axis through a limited pivoting angle and which has a base provided with a plane reflecting surface.

A device of the afore-mentioned type is known from the Applicant's United States Patent Specification 4,123,146, i.e. a pivoting-mirror device for a video disc-player. The pivoting-mirror device is intended to be incorporated in a video disc player in the light path between a laser and the reflecting surface of a video disc. By means of the pivoting-mirror device a light beam emitted by a laser can be deflected through a limited range of angles under the influence of an electric control signal, so that by means of an automatic electronic control the light beam, which is concentrated to a read spot on the disc by means of an objective, can follow information tracks on the video disc. For a more comprehenive description of a video disc system reference is made to a series of articles relating to this subject in "Philips Technical Review", Volume 33, 1973, no. 7, pages 178 to 193 (herewith incorporated by reference).

The reflection element should comply with stringent mechanical requirements. The reflecting surface should have a high degree of planeness, not only when stationary but particularly when in motion. The control circuit in which the pivoting element is included should have a bandwidth of approximately 20 kHz. Parasitic resonances in the mechanical section of the control circuit, particularly the reflection element, should preferably not occur in the frequency range up to approximately 200 kHz. The reflection element should therefore have a combination of conflicting mechanical properties, namely a low mass, a high rigidity, as well as a small moment of inertia about the pivoting axis. It has been found that the said requirements can not readily be met by means of the known pivoting mirror devices. A further problem is that the reflecting surface, which is located on the base, is exposed to atmospheric influences and is mechanically vulnerable.

It is an object of the invention to provide an apparatus of the type mentioned in the preamble, which has a satisfactory combination of the said mechanical properties and a more effectively protected relfecting surface, and which furthermore has important additional advantages. the invention is characterized in that the base of the reflecting element comprises an optical body consisting of a cube and that the reflecting surface is disposed in a diagonal plane of the cube. By designing the reflecting element as a cube, it is possible to obtain a reflection element whose thickness, measured in a direction perpendicular to the reflecting surface, increases from the edge of the reflecting surface towards the centre of the reflecting surface. For a given degree of rigidity the mass and the moment of inertia of the reflecting element can therefore be smaller than when a plane mirror of equal rigidity is employed. The portions of the optical body disposed on the side of the reflection element which faces the radiation source also contribute to the rigidity of the reflection element. The reflecting surface is enclosed between separate portions of the cube and may therefore be manufactured from materials with a comparatively high degree of mechanical vulnerability or materials which may be affected by atmospheric influences.

A cube therefore provides a satisfactory combination of rigidity, low mass and low moment of inertia. Suitably, use can be made of an embodiment in which the cube comprises two prisms which are placed with their bases against each other, the reflecting surface being disposed on the base of at least one of the prisms. In accordance with a further embodiment of the invention, the reflecting surface may then be provided with a polarization splitting layer. Such layers are known, but their use on pivoting mirrors has been avoided in view of their comparative softness and consequent risk of mechanical damage. If a radiation source which produces a polarized radiation beam, such as for example a laser, and a so-called 1/4 $\lambda$ plate are used, a suitable light path for, for example, a video disc player can be realized by the use of a polarization splitting layer. The reflecting surface of the reflection element then reflects the light beam from the laser but transmits the light beam which is reflected and modulated by the information carrier.

Similarly to said known pivoting-mirror device the apparatus in accordance with the invention may comprise a frame, as well as a pivotal bearing arrangement for pivotably supporting the reflection element, specifically the cube, relative to the frame, which arrangement comprises stationary bearing means which are rigidly connected to the frame and bearing means which are rigidly connected to the cube and pivotable about the said pivoting axis, and furthermore electromagnetic pivoting means for exerting pivoting torques on the cube depending on the electric control signal, which pivoting means comprise stationary pivoting means on the frame and pivotable pivoting means, which electromagnetically cooperate with said stationary pivoting means and are rigidly connected to the cube. Such an apparatus, in accordance with an embodiment of the invention, may be characterized in that the pivoting axis is situated in the plane in which the reflecting surface is also situated; in that the pivoting axis extends through the mass-centre of the cube; and in that each of the pivotable pivoting means is disposed on a side surface of the cube with which the pivoting axis intersects.

The advantages of this embodiment are that the mass and the moment of inertia have a minimum value, that the reflecting surface performs no translations during pivoting and that, since no external torques are exerted on the optical body which tend to return it to the zero position, an increased bandwidth can be obtained.

If the cube comprises two identical prisms with a reflecting surface in the form of a polarization splitting layer interposed between them, a further embodiment of the device in accordance with the invention is of interest for apparatus for reading information on a reflecting information carrier by means of a radiation beam, which information carrier is provided with an information structure for modulating the radiation beam which is reflected by the information carrier. This embodiment comprises a radiation source and furthermore opto-electronic conversion means for converting the radiation-beam modulation into an electrical modulation, the cube having a front surface facing the radiation source and a corresponding back surface, a top surface facing the information carrier and a corresponding bottom surface, as well as left-hand and right-hand side surfaces, the front surface and the top surface belonging to the one prism and the back surface and the bottom surface to the other prism. This embodiment is characterized in that each of the two prisms of the reflection element is transparent to the radiation beam; in that the opto-electronic conversion means are disposed in the path of that part of the radiation beam reflected by the information carrier which emerges from the bottom surface of the cube; and in that the pivotable bearing means as well as the pivotable electro-dynamic pivoting means are arranged on at least one of the two side surfaces of the cube.

The invention will now be described in more detail with reference to the drawing, which shows an embodiment of the invention and in which:

Fig. 1 schematically represents a light path of an apparatus for recording and/or reproducing video signals,

Fig. 2 is a perspective view of a mechanical unit for supporting and rotating an information disc, shown partly in sectional view, and for supporting a light source and further opto-electronic and optical means,

Fig. 3 is a perspective view of the apparatus of Fig. 2 from another direction, and

Fig. 4 is an exploded view of the reflection element used in the apparatus of Figs. 2 and 3 with the associated bearing means and electromagnetic pivoting means.

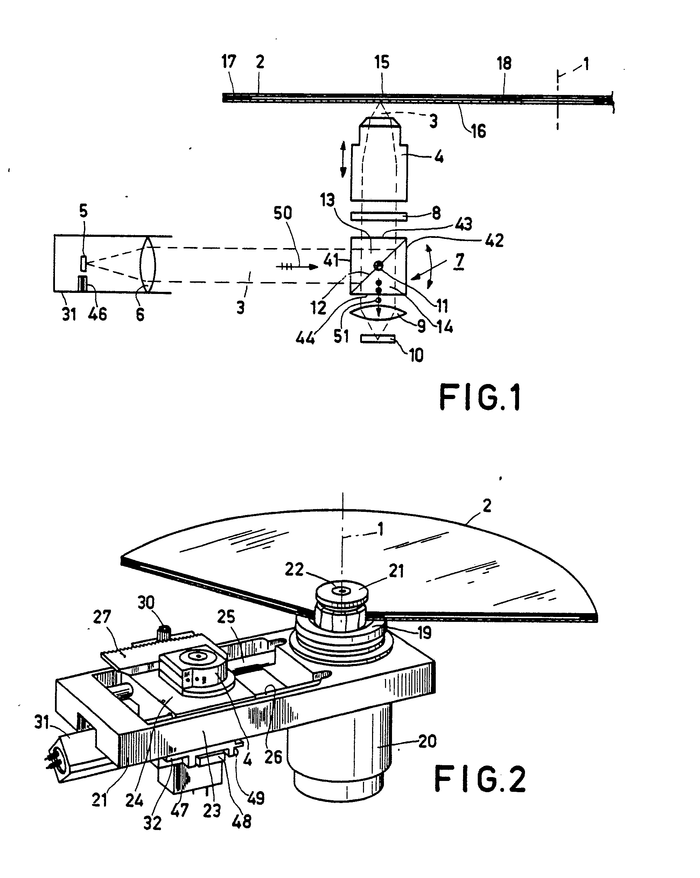

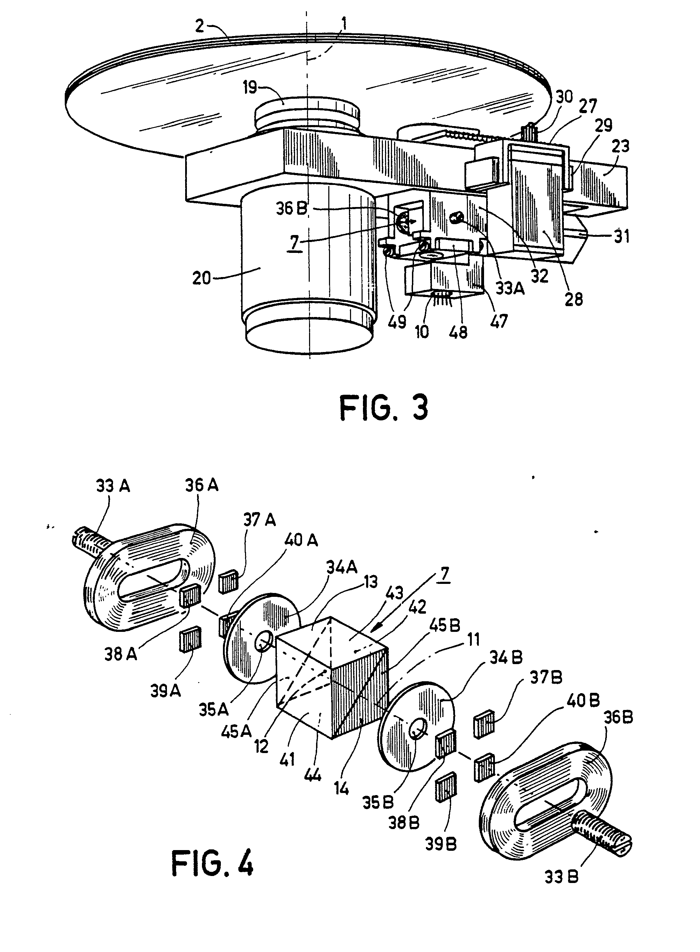

In Fig. 1 a video disc 2, which is rotated about an axis of rotation 1, is read by means of a light beam 3, which is produced by a schematically represented objective 4. The light beam is obtained by means of a semiconductor laser 5. Between the semiconductor laser and the objective there are disposed a lens 6, an electrically pivotable reflection device 7, and a so-called 1/4-λ plate 8. The light beam which is reflected by the video disc 2 again passes through the 1/4-λ plate then passes through the reflection device 7 and the lens 9 and is finally concentrated on an opto-electronic device 10. The reflection device 7 for reflecting the light beam 3 is pivotable about a pivoting axis 11 which is normal to the plane of the drawing. By means, shown in Fig. 4 and to be described hereinafter, the reflection device is electrically pivotable through a limited range of angles in response to an electric control signal. A reflecting surface 12 serves for reflecting the light beam from the laser 5. However, the light beam which is reflected by the video disc is transmitted, substantially unaffected, to the opto-electronic means 10. This will be discussed in more detail hereinafter. The reflection device comprises a base, which consists of an optical body, comprising separate portions 13 and 14, and the reflecting surface 12 is interposed between these portions.

The disc 2 is of a type as described previously in the Applicant's United States Patent Specification 4,074,282 (herewith incorporated by reference). The disc comprises two transparent disc elements 15 and 16 which are spaced by means of two metal spacers 17 and 18, so that between the two disc elements an enclosed space 19 is formed. On the side facing the space 19 a special layer is vacuum-deposited onto the disc elements 15 and 16, which layer consists of a material in which pits having dimensions of the order of magnitude of microns can be burned by means of the light beam 3. The disc 2 has a diameter of the order of magnitude of 10 cm and is supported by a platter 19 which is driven by an electric motor 20. The disc is urged onto the platter 19 by means of a nut 21 which is fitted onto a threaded spindle 22 connected to the platter 19.

The motor 20 is mounted in a frame 23, in which a carriage 24 is radially movable. For guiding the carriage there are provided guide rods 25 and 26 in the frame, over which bearing bushes of the carriage 24 can slide. On its side surface the carriage 24 has a gear-rack 27. On the side wall of the frame 23 a motor 28 is mounted which is provided with an internal gear transmission and which is pivotably journalled with the aid of a bearing bracket 29. The motor 28 drives a pinion 30, which cooperates with the gear rack 27. By means of a compression spring, not shown, the motor 28 is constantly tilted in such a way that the pinion 30 is urged against the gear rack 27 with a predetermined force.

The semiconductor laser 5 is accommodated in the housing 31, which is rigidly secured to the frame 23. This housing also accommodates the lens 6. On its underside, see in particular Figure 3, the carriage 24 also carries a frame 32 for supporting the electrically controllable reflection device 7.

Referring to Figure 4, the optical body substantially takes the form of a cube and the reflecting surface 12 is disposed in a diagonal plane of the cube. The cube comprises two prisms 13 and 14 which are placed with their bases against each other, the reflecting surface being disposed on the base surface of one of said prisms. Said surface is provided with a polarization splitting layer. Such layers are known *per se* and, for the wavelength of a semiconductor laser, they may for example consist of a mixture of magnesium oxide and magnesium fluoride. Some seventeen layers of this material may be deposited onto a base surface of one of the two prisms, each layer having a thickness of 800 to 1000 Å, so that a layer having an overall thickness of approximately 1.7 microns is obtained. The two splitter prisms can be connected to each other by customary means for cementing optical elements such as lenses to each other. By the use of the polarisation splitting layer and employing the 1/4 λ plate, a light path as shown in Figure 1 can be obtained. The polarization of the reflected light beam is rotated through 90° in total relative to the beam from the laser 5, so that the reflecting surface 12 transmits the reflected beam to the lens 9 and the opto-electronic device 10. The 1/4-λ plate 8 is mounted in the carriage 24, which is not visible in Figures 2 and 3. The difference in direction of polarization of the forward and returning light beams is symbolically represented by the arrows 50 and 51 in Figure 1.

The reflection device 7 belongs to apparatus which, in addition to the reflection device, also comprises the frame 32 and a pivotal bearing arrangement for pivotably supporting the optical body comprising the two prisms 13 and 14 relative to the frame. The pivotable bearing arrangement comprises stationary bearing means, which are rigidly connected to the frame 32, in the form of pins 33A and 33B and bearing means in the form of two discs 34A and 34B which are pivotable about the pivoting axis 11 and are secured to the cube. The discs are formed with bearing openings 35A and 35B, each of which receives one of the free ends of the respective pins 33A and 33B with some clearance. The device furthermore comprises electromagnetic pivoting means for exerting pivoting torques on the cube, depending on an electric control signal. Said means comprise stationary pivoting means in the form of two coils 36A and 36B on both sides of the cube. These coils are rigidly connected to the frame 32 and may for example be glued thereto. On the cube a plurality of electromagnetic pivoting means which cooperate with the coil are disposed in the form of a number of permanent magnets 37A to 40A on the one side and 37B to 40B on the other side of the cube. These magnets are glued onto the discs 34A and 34B respectively, which discs are made of a suitable soft-magnetic material, so that they not only serve as bearing elements for the cube but also as a magnetic short-circuit for the permanent magnets mounted on them. The direction of magnetization of the magnets is selected so that the device is comparatively insensitive to spurious external magnetic fields, such as for example the magnetic field of the motor 20. For this purpose the magnets 37A and 39A are magnetized in a first direction, so that their north poles are situated in the direction of the coil 36A. The two other magnets 38A and 40A are magnetized in the opposite direction, so that they face the coil 36A with a south pole. Furthermore, the magnets 37B and 39B face the coil 36B with south poles and the magnets 38B and 40B with a north pole.

The pivoting axis 11 is situated in the plane in which the reflecting surface 12 is also disposed. Since the optical body comprising the combined prisms 13 and 14 is a cube, the mass centre of said body is disposed in the plane 12. The pivoting axis 11 extends through said mass centre. There are no resilient means for returning the cube to a zero position after it has pivoted through a certain angle. Since moreover, the pivoting axis 11 extends through the mass centre, the optical body is consequently supported by the pivotable bearing arrangement in neutral equilibrium. Which means that the cube is in equilibrium in any pivoting position. In this respect it is obviously also of significance that the discs 34A and 34B as well as the permanent magnets 37A to 40A and 37B to 40B are disposed symmetrically relative to the pivoting axis 11. The discs 34A and 34B are disposed on both side faces of the cube which cannot be used for other purposes, so that the cubic shape of the optical body is utilized effectively.

The cube has a front surface 41 which confronts the radiation source, corresponding back surface 42, a top surface 43 facing the information carrier 2, a bottom surface 44, as well as left-hand and right-hand side surfaces 45a and 45b. The front surface 41 and the top surface 43 belong to the prism 13 and the back surface 42 and bottom surface 44 belong to the prism 14. The two prisms 13 and 14 are transparent to the light beam 3 and are for example made of a suitable type of glass or plastics. The radiation beam is modulated by the information contained in an information structure on the disc 2. The reflected radiation beam is directed to the opto-electronic conversion means 10, which convert the radiation-beam modulation into an electrical modulation. The opto-electronic conversion means 10 are disposed in the path of that part of the radiation beam reflected by the disc 2 which emerges from the bottom surface 44 of the cube. The pivotable bearing means 34A and 34B, as well as the pivotable electrodynamic pivoting means 37A to 40A and 37B to 40B, are disposed on the two respective side surfaces 45A and 45B of the cube. Thus, effective use is made of the cube in the embodiment shown. All surfaces of the cube, except for the back surface 42, have a function. The opto-electronic means 10 are mounted on a holder 47, which is mounted on a frame 32. The lens 9 is mounted in the frame 32, namely in a mount 48 whose position is adjustable with screws 49.

In principle, the back surface can also be used, namely for detecting the cube position. In the case of a neutrally journalled reflection device it is necessary that the cube position is detected continuously, in order to enable the cube to be controlled towards its zero position by electronic means with the aid of the control coils 36A and 36B. The back surface 42 may for example be provided with a reflecting layer for reflecting a light pencil emitted by a separate light source, whose reflection is picked up by opto-electronic means provided for this purpose. The amount of reflected light received by said means depends on the cube position. Another possibility is to have part of the light from the semiconductor laser 5 pass through the reflecting surface 12 and to employ the light emerging from the back surface 42 of the cube for position detection.

Figure 1 shows yet another method of position detection. The zero position of the cube is selected so that a small angle is obtained between the front surface 41 of the cube and the light beam 3 incident on it. The part of the light beam which is reflected by the front surface 41 returns through the lens 6 and is imaged on an opto-electronic position-detection element 46 adjacent the semiconductor laser 5. Such arrangements are known *per se* and have the advantage that effective use is made of the small amount of reflected light, because the lens 6 concentrates the reflected light to a small spot in the focal plane of the lens.

The frame 23 has dimensions of approximately 100 × 40 mm. The cube has an edge of approximately 6 mm and owing to its high rigidity it has a very high natural frequency. An additional advantage of the use of the prism 13 is that owing to the presence of glass or plastics between the reflecting surface 12 and the objective 4, as a result of the refraction of the light in the glass or plastics, the position of the pivoting axis 11 is apparently shifted in the direction of the objective 4. In the ideal case the pivoting axis 11 is disposed in the focus of the objective. However, in many cases this is not possible, but it is always desirable to dispose the pivoting axis as close to the focus of the objective 4 as possible.

**Claims**

1. An apparatus comprising an electrically controllable reflection device (7) for deflecting a radiation beam (3) in a direction which depends on an electric control signal, which device comprises a reflection element which is electrically pivotable about a pivoting axis through a limited pivoting angle and which has a base provided with a plane reflecting surface (12), characterized in that the base of the reflection element comprises an optical body in the form of a cube and that the reflecting surface (12) is disposed in a diagonal plane of the cube.

2. An apparatus as claimed in Claim 1, characterized in that the cube comprises two prisms (13, 14) which are placed with their bases against each other, the reflecting surface being disposed on one base surface.

3. An apparatus as claimed in Claim 1, characterized in that the reflecting surface (12) is provided with a polarization-splitting layer.

4. An apparatus as claimed in Claim 1, comprising:
— a frame (32),
— a pivotal bearing arrangement for pivotably supporting the cube (13, 14) relative to the frame, which arrangement comprises stationary bearing means (33A, 33B) which are rigidly connected to the frame (32), and

— electromagnetic pivoting means for exerting pivoting torques on the cube depending on the electric control signal, which pivoting means comprise stationary pivoting means (36A, 36B) on the frame and pivotable pivoting means, which electromagnetically cooperate with said stationary pivoting means and are rigidly connected to the cube,
characterized in that
— the pivoting axis (11) is disposed in the plane in which the reflecting surface is also situated,
— that the pivoting axis extends through the mass-centre of the cube, and
— that each of the pivotable pivoting means is disposed on a side surface of the cube with which the pivoting axis intersects.

5. An apparatus as claimed in Claim 2, 3 and 4, for reading information on a reflecting information carrier by means of the radiation beam, which carrier is provided with an information structure for modulating the radiation beam reflected by the information carrier and comprising:
— a radiation source,
— opto-electronic conversion means (10) for converting the radiation beam modulation into an electrical modulation,
the cube having a front surface (41) facing the radiation source and furthermore a back surface (42), a top surface (43) facing the information carrier, a bottom surface (44), as well as left-hand and right-hand side surfaces (45A, 45B), the front surface (41) and the top surface (43) belonging to the one prism (13) and the back surface (42) and the bottom surface (44) to the other prism (14),
characterized in that
— each of the two prisms (13, 14) of the reflection element is transparent to the radiation beam,
— the opto-electronic conversion means (10) are disposed in the path of that part of the radiation beam (3) reflected by the information carrier (2) which leaves the bottom surface (44) of the cube and
— the pivotable bearing means (34A, 34B) as well as the pivotable electrodynamic pivoting means (37A—40A, 37B—40B) are arranged on at least one of the two side surfaces (45A, 45B) of the cube.

**Revendications**

1. Appareil comprenant un dispositif de réflexion contrôlable électriquement (7) pour faire dévier un faisceau de rayonnement (3) dans une direction qui dépend d'un signal électrique de commande, ce dispositif comprenant un élément de réflexion qui peut pivoter électriquement autour d'un axe de pivotement d'un angle de pivotement limité et qui comporte une base pourvue d'une surface réfléchissante plane (12), caractérisé en ce que la base de l'élément de réflexion comprend un corps optique ayant la forme d'un cube, la surface réfléchissante (12) étant disposée dans un plan diagonal du cube.

2. Appareil suivant la revendication 1, caractérisé en ce que le cube comprend deux prismes (13, 14) qui sont placés avec leurs bases l'une contre l'autre, la surface réfléchissante étant disposée sur la surface d'une base.

3. Appareil suivant la revendication 1, caractérisé en ce que la surface réfléchissante (12) est pourvue d'une couche séparatrice par polarisation.

4. Appareil suivant la revendication 1 comprenant:
— un bâti (32),
— un dispositif d'appui pivotant pour supporter le cube (13, 14) à pivot par rapport au bâti, ce dispositif comprenant des moyens d'appui fixes (33A, 33B) qui sont reliés rigidement au bâti (32), et
— des moyens de pivotement électromagnétiques pour exercer des couples de pivotement sur le cube en fonction du signal électrique de commande, ces moyens de pivotement comprenant des moyens de pivotement fixes (36A, 36B) sur le bâti et des moyens de pivotement pouvant pivoter qui coopèrent électromagnétiquement avec les moyens de pivotement fixes et sont reliés rigidement au cube,
caractérisé en ce que
— l'axe de pivotement (11) est disposé dans le plan dans lequel la surface réfléchissante est aussi située,
— l'axe de pivotement s'étend à travers le centre de masse du cube, et
— chacun des moyens de pivotement pouvant pivoter est disposé sur une surface latérale du cube que l'axe de pivotement recoupe.

5. Appareil suivant les revendications 2, 3 et 4, pour lire de l'information sur un support d'information réfléchissant au moyen du faisceau de rayonnement, ce support étant pourvu d'une structure d'information destinée à moduler le faisceau de rayonnement réfléchi par le support d'information et comprenant:
— une source de rayonnement,
— des moyens de conversion optoélectroniques (10) pour convertir la·modulation du faisceau de rayonnement en une modulation électrique,
le cube comportant une surface antérieure (41) tournée vers la source de rayonnement et, en outre, une surface postérieure (42), une surface supérieure (43) tournée vers le support d'information, une surface inférieure (44) ainsi que des surfaces latérales gauche et droite (45A, 45B), la surface antérieure (41) et la surface supérieure (43) appartenant au premier prisme (13) et la surface postérieure (42) ainsi que la surface inférieure (44) à l'autre prisme (14),
caractérisé en ce que
— chacun des deux prismes (13, 14) de l'élément de réflexion est transparent au faisceau de rayonnement,
— les moyens de conversion optoélectroniques (10) sont disposés dans le trajet de la partie du faisceau de rayonnement (3) réfléchie par le support d'information (2) qui quitte la surface inférieure (44) du cube, et

— les moyens d'appui pouvant pivoter (34A, 34B), ainsi que les moyens d'appui électrodynamiques pouvant pivoter (37A—40A), 37B—40B) sont disposés sur au moins une des deux surfaces latérales (45A, 45B) du cube.

**Patentansprüche**

1. Gerät mit einer elektrisch steuerbaren Reflexionsvorrichtung (7) zum Reflektieren eines Strahlungsbündels (3) in einer Richtung, die von einem elektrischen Steuersignal abhängig ist und welche Vorrichtung ein um eine Schwenkachse über einen beschränkten Schwenkwinkel elektrisch schwenkbares Reflexionselement hat mit einer Basis mit einer flachen reflektierenden Oberfläche (12), dadurch gekennzeichnet, dass die Basis des Reflektionselementes aus einem optischen Körper in Form eines Würfels besteht und dass die reflektierende Oberfläche (12) sich in einer Diagonalebene des Würfels befindet.

2. Gerät nach Anspruch 1, dadurch gekennzeichnet, dass der Würfel zwei Prismen (13, 14) enthält, die mit ihren Basisflächen gegeneinander angeordnet sind, wobei die reflektierende Oberfläche sich auf nur einer Basisfläche befindet.

3. Gerät nach Anspruch 1, dadurch gekennzeichnet, dass die reflektierende Oberfläche (12) mit einer Polarisationsteilerschicht versehen ist.

4. Gerät nach Anspruch 1, mit:
— einem Gestell (32),
— einer Schwenklagerung zum gegenüber dem Gestell schwenkbaren Unterstützen des Würfels (13, 14), welche Vorrichtung ortsfeste Lagermittel (33A, 33B) aufweist, die mit dem Gestell (32) ortsfest verbunden sind und
— elektromagnetischen Schwenkmitteln zum Ausüben von Schwenkmomenten auf den Würfel und zwar abhängig von dem elektrischen Regelsignal, welche Schwenkmittel ortsfeste Schwenkmittel (36A, 36B) auf dem Gestell aufweisen und schwenkbare Schwenkmittel die mit den genannten ortsfesten Schwenkmitteln elektromagnetisch zusammenarbeiten und ortsfest auf dem Würfel angeordnet sind, dadurch gekennzeichnet,
— dass die Schwenkachse (11) in der Ebene liegt, in der auch die reflektierende Oberfläche liegt,
— dass die Schwenkachse sich durch den Massenmittelpunkt des Würfels erstreckt und
— dass jedes der schwenkbaren Schwenkmittel sich auf einer von der schwenkachse geschnittenen Seitenfläche des Würfels befindet.

5. Gerät nach Anspruch 2, 3 und 4 zum mit Hilfe des Strahlungsbündels Auslesen von Information auf einem reflektierenden Informationsträger mit einer Informationsstruktur zum Modulieren eines von dem Informationsträger reflektierten Strahlungsbündels und mit
— einer Strahlungsquelle,
— einem optoelektronischen Wandler (10) zum Umwandeln der Strahlungsbündelmodulation in eine elektrische Modulation, wobei der Würfel eine der Strahlungsquelle zugewandte Vorderfläche (41) hat und weiterhin eine Rückfläche (42), eine dem Informationsträger zugewandte obere Fläche (43), eine untere Fläche (44) sowie linke und rechte Seitenflächen (45A, 45B) und wobei bei Vorderfläche (41) und die obere Fläche (43) zu dem einem Prisma (13) und die Rückfläche (42) und die unter Fläche (44) zu dem anderen Prisma (14) gehören,

dadurch gekennzeichnet, dass

— jedes der beiden Prismen (13, 14) des Reflexionselementes für das Strahlungsbündel transparent ist,

— der optoelektronische Wandler (10) sich in dem Weg desjenigen Teils des von dem Informationsträger (2) reflektierten Strahlungsbündels (3) befindet, der die untere Fläche (44) des Würfels verlässt und

— die schwenkbaren Lagermittel (34A, 34B) sowie die schwenkbaren elektrodynamischen Schwenkmittel (37A—40A, 37B—40B) sich auf wenigstens einer der beiden Seitenflächen (45A, 45B) des Würfels befinden.

# FIG.1

# FIG.2

FIG. 3

FIG. 4